Europäisches Patentamt

European Patent Office

Office européen des brevets

(19)

(11) Veröffentlichungsnummer: **0 329 840 B1**

# (12) EUROPÄISCHE PATENTSCHRIFT

(45) Veröffentlichungstag der Patentschrift: **01.04.92**

(51) Int. Cl.5: **G01N 1/00**

(21) Anmeldenummer: **88120431.7**

(22) Anmeldetag: **07.12.88**

(54) **Vorrichtung zum automatischen, wiederholten Beschicken des Ofens eines Proben-Analysengerätes mit Tiegeln.**

(30) Priorität: **20.02.88 DE 3805321**

(43) Veröffentlichungstag der Anmeldung:
**30.08.89 Patentblatt 89/35**

(45) Bekanntmachung des Hinweises auf die
Patenterteilung:
**01.04.92 Patentblatt 92/14**

(84) Benannte Vertragsstaaten:
**DE FR GB**

(56) Entgegenhaltungen:
**FR-A- 2 357 844**
**US-A- 4 539 645**

**PATENT ABSTRACTS OF JAPAN, Band 8, Nr.**
**141 (P-283)[1578], 30. Juni 1984 & JP-A-59 40**
**257 (NIPPON TECTRON) 05-03-1984**

Erfinder: **Langen Harald**
**Amtsgasse 58**
**W-6113 Babenhausen(DE)**
Erfinder: **Kupka, Hans Joachim**
**Eifelweg 13**
**W-6451 Neuberg(DE)**
Erfinder: **Rossel, Gerhard**
**Carl-Diem-Strasse 15**
**W-8755 Alzenau 4(DE)**
Erfinder: **Weigand, Walter**
**Kolpingstrasse 26**
**W-6463 Freigericht 2(DE)**
Erfinder: **Wittenbeck, Rüdiger, Dr.**
**Hermann-Ehlers-Strasse 60**
**W-6450 Hannau 7(DE)**
Erfinder: **Hessler, Karl-Heinz**
**Kahlbergweg 10**
**W-8752 Mömbris 3(DE)**

(73) Patentinhaber: **FOSS HERAEUS ANALYSENSY-**
**STEME GmbH**
**Donaustrasse 7**
**W-6450 Hanau(DE)**

(72) Erfinder: **Weigand, Peter**
**Gunkelsrainstrasse 7**
**W-8755 Alzenau(DE)**

(74) Vertreter: **Heinen, Gerhard, Dr.**
**W.C. Heraeus GmbH Zentralbereich Patente**
**und Lizenzen Heraeusstrasse 12-14**
**W-6450 Hanau(DE)**

EP 0 329 840 B1

## Beschreibung

Die vorliegende Erfindung betrifft eine Vorrichtung zum automatischen, wiederholten Beschicken des Ofens eines Proben-Analysengerätes mit Tiegeln, die auf einer Förderbahn angeordnet sind, die jeweils eine Probe aufnehmen, und die mittels einer Hubeinrichtung nacheinander in den Ofen, der rohrförmig ausgebildet und mit seiner Achse vertikal weisend angeordnet ist, einfahrbar sind, wobei die Vorrichtung zum Erfassen der Tiegel ein Greifkopf mit zwei Klauen aufweist.

Eine derartige Vorrichtung zum Beschicken und Entladen des Ofens eines Analysengerätes mit Tiegeln ist aus der DE-OS 30 19 466 bekannt. Die Vorrichtung weist einen Induktionsofen auf, der oberhalb einer Förderbahn angeordnet ist. Auf der Förderbahn sind eine Vielzahl von Tiegeln mit jeweils einer Probe bevorratet, wobei jedem der Tiegel eine Greifzange mit beweglichen Klauen zugeordnet ist. Mit diesen Greifzangen, die an einem gemeinsamen Schlitten angeordnet entlang der Förderbahn in Richtung zu der Achse des Ofens hin verschiebbar sind, können mehrere Tiegel gleichzeitig an ihrer Außenseite erfaßt und in Richtung der Ofenachse versetzt werden. Der jeweils der Ofenachse nächstliegende Tiegel wird unterhalb des Ofens auf einen Hubkolben aufgesetzt, über den er dann nach Lösen der Greifzange nach oben in den Ofen, bei dem es sich um einen Induktionsofen handelt, eingefahren werden kann. Nach der Analyse wird der Tiegel wieder aus dem Ofen gefahren und entfernt. Die Greifzangen werden über den Schlitten in eine Position zurückgezogen und gefahren, daß sie die hintereinanderstehenden Tiegel einzeln erfassen und nach Verfahren des Schlittens in Richtung des Ofens um eine Position versetzen, so daß der nächste Tiegel unterhalb des Ofens positioniert wird. Um die Greifzangen zu öffnen und zu schließen, ist eine aufwendige Mechanik mit einer Vielzahl von beweglichen Teilen und Federn erforderlich.

Analysengeräte mit einer Verbrennungsapparatur zur Bestimmung des Gehaltes an einem oder mehreren der Elemente, wie C, H, O, N in flüssigen oder festen Proben, sind in einer Vielzahl, beispielsweise aus der DE-PS 24 27 921 oder DE-PS 35 40 659, bekannt.

Ausgehend von dem vorstehend zitierten Stand der Technik liegt der vorliegenden Erfindung nun die Aufgabe zugrunde, eine Vorrichtung zum automatischen, wiederholten Beschicken des Ofens eines Proben-Analysengerätes mit Tiegeln zu schaffen, die sich durch seine Wartungsfreundlichkeit und Störunanfälligkeit auszeichnet und in der die mechanisch bewegten Teile auf ein Minimum begrenzt sind.

Die Aufgabe wird dadurch gelöst, daß der Greifkopf starr mit einem Ende eines Arbeitskolbens verbunden ist und die Klauen aus zwei im Abstand parallel zueinander verlaufenden Stegen mit jeweils einem überkragenden Rand, die einander zugekehrt sind, bestehen, wobei der Arbeitskolben mit dem Ende eines Hubkolbens parallel zu dessen Achse mit seinem dem Greifkopf gegenüberliegenden Ende über eine Querstange verbunden ist derart, daß der Greifkopf in das Ofenrohr ein- und ausfahrbar und um die Achse des Hubkolbens schwenkbar ist, wobei auf dem Schwenkradius des Hubkolbens eine Be- und Entladestation liegt, an der die Tiegel, die einen nach außen überstehenden, umlaufenden Rand aufweisen, mittels des Förderbandes intervallweise vorbeigeführt werden, und wobei die Stege des Greifkopfes so ausgerichtet sind, daß sie den überstehenden Rand des jeweiligen Tiegels untergreifen. Mechanisch bewegte Teile sind lediglich zum Verfahren und Verschwenken des Arbeitskolbens, an dessen Ende der Greifkopf angeordnet ist, erforderlich, während der Greifkopf selbst starr am Ende des Arbeitskolbens befestigt ist und zum Erfassen bzw. Abstellen der Tiegel keinerlei bewegliche Greifelemente benötigt werden. Der Greifkopf ist derart ausgebildet, daß er den nach außen überstehenden, umlaufenden Rand der einzelnen Tiegel, die nacheinander an einer Be- und Entladestation bereitgehalten werden, mit seinen beiden Klauen untergreifen kann, ohne daß diese geöffnet oder geschlossen werden müssen. Alle zum Greifen bzw. Absetzen der Tiegel notwendigen Bewegungsabläufe können durch das Verschwenken des Arbeitskolbens um den Hubkolben und durch ein axiales Verschieben des Arbeitskolbens erreicht werden. Zum Erfassen eines Tiegels wird der Arbeitskolben mit dem Greifkopf zunächst in Richtung zu der Be- und Entladestation verschwenkt, wo, über eine Förderbahn herangefahren, ein Tiegel bereitgehalten wird. Der Arbeitskolben ist hierbei in axialer Richtung gesehen in eine Position verfahren, in der die nach innen überkragenden Ränder der Klauen geringfügig von dem überstehenden Rand des Tiegels beabstandet sind. Der Greifkopf wird in einer solchen Stellung soweit verschwenkt, bis sich der Tiegel zwischen den beiden Klauen des Greifkopfes befindet. Danach wird der Arbeitskolben axial nach oben verschoben, wobei die überkragenden Ränder des Greifkopfes an der Unterseite des überstehenden Randes des Tiegels zur Anlage kommen und diesen von dem Förderband abheben. Der Arbeitskolben mit dem Greifkopf und dem darin eingehängten Tiegel kann nun verschwenkt werden, bis der Tiegel oberhalb des Ofenrohres positioniert ist und in dieses eingefahren werden kann. In dem Ofenrohr verbleibt der Tiegel an dem Greifkopf, bis der Analysenvorgang abgeschlossen, d. h. bis die in dem Tiegel befindliche Probe vollständig verbrannt ist. Hiernach wird der Arbeitskolben wieder aus dem Ofenrohr herausgefahren, der Tiegel auf dem Förderband abgestellt und der nächste Tiegel mittels des Förderbandes zu der Be- und Enladestation verfahren.

An die Anzahl der Tiegel mit Proben, die nacheinander in den Ofen eingefahren werden können, ist keine Grenze gesetzt; sie kann beliebig durch die Länge der Förderbahn variiert werden. Der gesamte Bewegungsablauf des Hubkolbens und des Arbeitskolbens mit dem Greifkopf, der in jedem Arbeitszyklus nur aus wenigen Bewegungen besteht, ist in einfacher Weise durch elektrische und elektronische Regel- und Steuereinrichtungen automatisierbar. Hierbei hat es sich von Vorteil erwiesen, als Hubkolben oder diesem zugeordnet eine Gewindespindel einzusetzen, die über einen Schrittmotor angetrieben wird. Über diese Gewindespindel kann ein an Führungsstangen geführter Kopf oder Schlitten verschoben werden, an den der Arbeitskolben über die Querstange angeordnet ist. Die einzelnen Hubbewegungen, die die Gewindespindel ausführen muß, sind beispielsweise durch eine entsprechende Programmierung der Schrittmotorsteuerung festlegbar.

Da der Arbeitskolben und der Greifkopf während des gesamten Verbrennungsvorganges in dem Ofenrohr verbleiben, in dem Temperaturen bis 1100°C auftreten können, sollten diese Teile aus Aluminiumoxid gefertigt sein. Um das Ofenrohr während jedes Verbrennungsvorganges gasdicht zu verschließen, ist am Ende des Arbeitskolbens, das dem Greifkopf gegenüberliegt, ein Endteil von Vorteil, das das Ofenrohr mit dem Einfahren des Arbeitskolbens ohne weitere Maßnahmen abschließt.

Bevorzugt wird die Gewindespindel mittels eines gehäusefesten Antriebes gedreht, während der Arbeitskolben über einen Antrieb verschwenkt wird, der entlang des Hubkolbens mitverfahrbar angeordnet ist.

Weitere Einzelheiten und Merkmale der Erfindung ergeben sich aus der nachfolgenden Beschreibung eines Ausführungsbeispiels anhand der Zeichnung. In der Zeichnung zeigt

Figur 1   eine Draufsicht auf ein Proben-Analysengerät mit einem Vorrat an Tiegeln,

Figur 2   eine Ansicht auf die Beschickungseinrichtung der Figur 1 aus Richtung des Pfeiles II in Figur 1,

Figur 3   die Beschickungsvorrichtung nach Figur 2 in einer um 90° gedrehten Seitenansicht mit in ein Ofenrohr eingefahrenem Arbeitskolben,

Figur 4   einen Greifkopf am Ende des Arbeitskolbens mit darin eingehängtem Tiegel und

Figur 5   einen Schnitt entlang der Schnittlinie V-V in Figur 4.

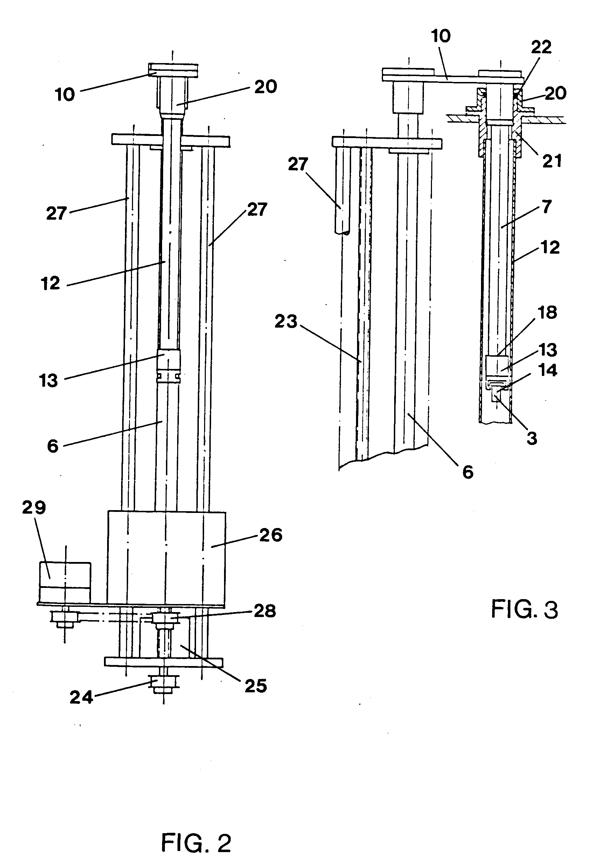

Die Vorrichtung weist eine Förderbahn 1 auf, die endlos mäanderförmig über einen Arbeitstisch 2 geführt ist. Auf dieser Förderbahn 1 sind eine Vielzahl von Tiegeln 3 aufgesetzt, die gleichmäßig zueinander beabstandet sind. Für die einzelnen Tiegel 3 können auf der Förderbahn nicht näher dargestellte Aufnahmewannen vorgesehen werden, um die Positionen der einzelnen Tiegel festzulegen. Im Bereich einer der Umlenkungen der Förderbahn 1 ist eine Be- und Entladestation 4 vorhanden, im Bereich derer die Tiegel mit den darin eingefügten zu analysierenden Proben der Förderbahn 1 entnommen werden. Das Beschickungssystem 5 weist einen Hubkolben 6 und einen Arbeitskolben 7 auf, deren Achsen mit 8 und 9 bezeichnet sind. Der Hubkolben 6, an dessen oberem Ende der Arbeitskolben 7 über eine Querstange 10 verbunden ist, wie dies insbesondere die Figur 3 zeigt, ist in axialer Richtung verfahrbar sowie um die Achse 8 verschwenkbar, so daß der Schwenkradius des mit dem Hubkolben 6 verbundenen Arbeitskolbens 7, durch die strichpunktierte Kreisbahn 11 angedeutet, die Be- und Entladestation 4 überstreicht. Auf der Kreisbahn 11 liegt weiterhin die Achse eines Ofenrohres 12, in das der jeweilige Tiegel 3 mit der zu analysierenden Probe eingefahren wird.

Um die einzelnen Tiegel 3 an der Be- und Entladestation 4 zu positionieren, kann eine mit dem Antrieb der Förderbahn 1 verbundene Lichtschranke vorgesehen werden, die nicht näher dargestellt ist.

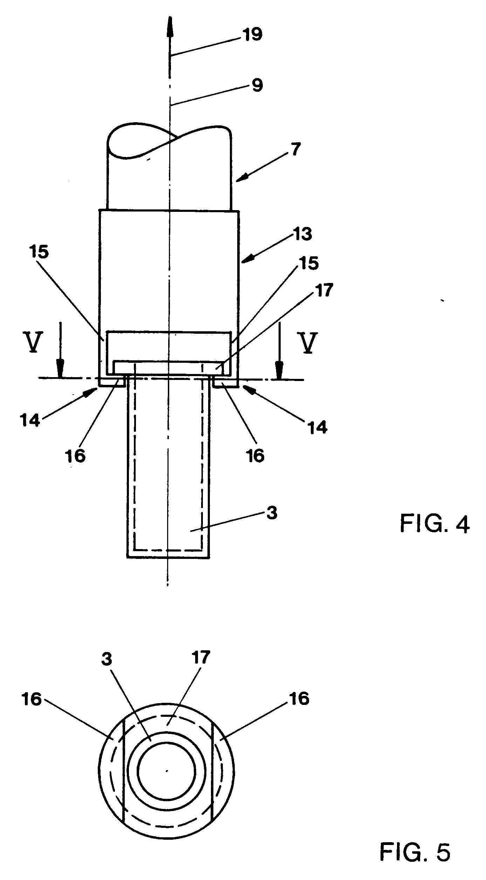

Am Ende des Arbeitskolbens 7, der aus Aluminiumoxid besteht, ist ein Greifkopf 13, ebenfalls aus Aluminiumoxid, angeordnet, der in den Figuren 4 und 5 zu sehen ist. Der Greifkopf 13 weist zwei Klauen 14 auf, die jeweils einem in Richtung der Achse 9 des Arbeitskolbens 7 verlaufenden Steg 15 mit einem nach innen, d. h. zur Achse 9 hin überkragenden Rand 16 besteht. In diese Klauen 14 werden die Tiegel 3, die an ihrer Oberseite einen umlaufenden Rand 17 aufweisen, eingehängt. Der Abstand der Innenseiten der beiden Stege 15 ist derart gewählt, daß der umlaufende Rand 17 des Tiegels 3 zwischen diesen Stegen 15 aufgenommen werden kann. Entsprechend sind die einander zugewandten Stirnflächen der beiden überkragenden Ränder 16 in einer Länge ausgeführt, daß einerseits der umlaufende Rand 17 eine sichere Auflage hat, andererseits der Körper des Tiegels 3 klemmfrei zwischen diesen Rändern 16 aufgenommen werden kann. Um den Greifkopf 13 unterschiedlichen Tiegeln 3 anpassen zu können, ist er an dem Arbeitskolben 7 entlang der Trennlinie 18 lösbar befestigt. Da der Greifkopf 13 an mindestens einer Seite offen ist, wie dies die Figur 5 zeigt, kann er frei unterhalb des umlaufenden Randes 17 eines auf seinem Boden aufstehenden Tiegels 3 schwenken und, durch eine anschließende Hubbewegung in Richtung des Pfeiles 19 in Figur 4, den umlaufenden Rand 17 des Tiegels 3 untergreifen und diesen anheben. Für diesen Greifvorgang müssen am Greifkopf 13 keine Teile bewegt werden.

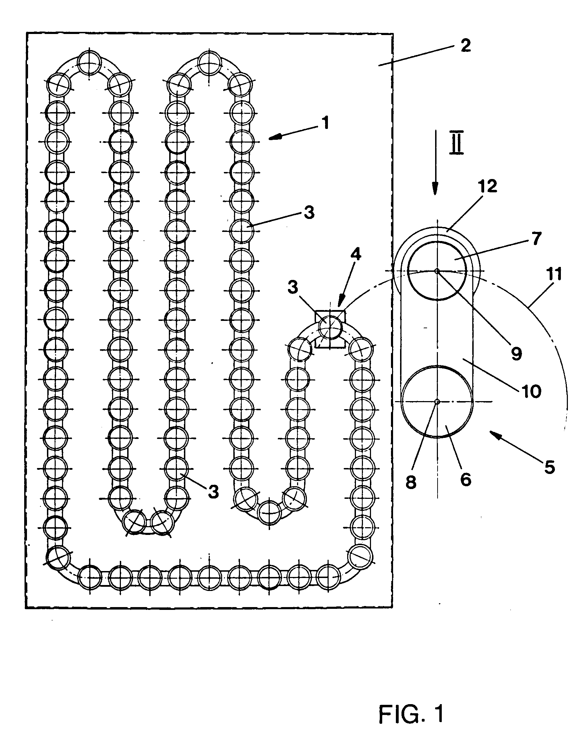

Nachdem ein Tiegel 3, wie vorstehend erläutert, im Bereich der Be- und Entladestation 4 durch den Greifkopf 13 erfaßt wurde, wird der Hubkolben 6 um seine Achse 8 in die in Figur 1 gezeigte Stellung über das Ofenrohr 12 verschwenkt und anschließend zusammen mit dem Arbeitskolben 7 und dem im Greifkopf 13 hängenden Tiegel 3 in das Ofenrohr 12 eingefahren, wie dies in Figur 3 zu sehen ist. Um das Ofenrohr 12 während des Verbrennungsvorganges zu verschließen, ist zwischen dem den Hubkolben 6 und den Arbeitskolben 7 verbindenden Querteil 10 und dem Ende des Arbeitskolbens 7 ein Endteil 20 eingefügt, das sich gegen ein Abschlußteil 21 des Ofenrohres mit einem O-Ring 22 dichtend anlegt.

Zum axialen Verschieben des Hubkolbens 6 ist eine Gewindespindel 23 vorgesehen, die über ein in das Antriebsrad 24 eingreifenden Antriebsmotor 25 verdrehbar ist. Mit dem Verdrehen der Gewindespindel 23 wird ein Schlitten 26, der an mehreren Führungsstangen 27 geführt ist, verschoben, an den der Hubkolben 6 befestigt ist. Der Hubkolben 6 ist durch ein Doppelrohr gebildet, wobei das Innenrohr über das weitere Antriebsrad 28 und den zusammen mit dem Schlitten 26 verfahrbaren weiteren Antriebsmotor 29 um seine Achse schwenkbar ist, um die Schwenkbewegung des mit der Querstange 10 verbundenen Arbeitskolbens 7 auszuführen.

**Patentansprüche**

1. Vorrichtung zum automatischen, wiederholten Beschicken des Ofens (12) eines Proben-Analysengerätes mit Tiegeln (3), die auf einer Förderbahn (1) angeordnet sind, die jeweils eine Probe aufnehmen, und die mittels einer Hubeinrichtung (6) nacheinander in den Ofen, der rohrförmig ausgebildet und mit seiner Achse vertikal weisend angeordnet ist, einfahrbar sind, wobei die Vorrichtung zum Erfassen der Tiegel ein Greifkopf (13) mit zwei Klauen (14) aufweist, dadurch gekennzeichnet, daß der Greifkopf (13) starr mit einem Ende eines Arbeitskolbens (7) verbunden ist und die Klauen aus zwei im Abstand parallel zueinander verlaufenden Stegen (15) mit jeweils einem überkragenden Rand (16), die einander zugekehrt sind, bestehen, wobei der Arbeitskolben (7) mit dem Ende eines Hubkolbens (6) parallel zu dessen Achse (8) mit seinem dem Greifkopf (13) gegenüberliegenden Ende über eine Querstange (10) verbunden ist derart, daß der Greifkopf (13) in das Ofenrohr (12) ein- und ausfahrbar und um die Achse (8) des Hubkolbens (6) schwenkbar ist, wobei auf dem Schwenkradius (11) des Hubkolbens (6) eine Be- und Entladestation (4) liegt, an der die Tiegel (3), die einen nach außen überstehenden, umlaufenden Rand (17) aufweisen, mittels des Förderbandes (1) intervallweise vorbeigeführt werden, und wobei die Klauen (14) des Greifkopfes (13) so ausgerichtet sind, daß sie den überstehenden Rand (17) des jeweiligen Tiegels (3) untergreifen.

2. Vorrichtung nach Anspruch 1, dadurch gekennzeichnet, daß der Hubkolben (6) oder ein dem Hubkolben zugeordneter Kolben eine Gewindespindel (23) ist.

3. Vorrichtung nach Anspruch 1 oder 2, dadurch gekennzeichnet, daß der Arbeitskolben (7) und der Greifkopf (13) Teile aus Aluminiumoxid sind.

4. Vorrichtung nach einem der Ansprüche 1 bis 3, dadurch gekennzeichnet, daß an dem Ende des Arbeitskolbens (7), an dem die Querstange (10) angreift, ein Endteil (20) angeordnet ist, das den Ofen (12) verschließt.

5. Vorrichtung nach Anspurch 2, dadurch gekennzeichnet, daß die Gewindespindel (23) mittels eines gehäusefesten Antriebs (25) drehbar ist.

6. Vorrichtung nach einem der Ansprüche 1 bis 5, dadurch gekennzeichnet, daß der Arbeitskolben (7) über einen Antrieb (29) verschwenkbar ist, der entlang des Hubkolbens (6) mitverfahrbar angeordnet ist.

**Claims**

1. Apparatus for automatic repeat charging of the furnace (12) of a sample analysis device with crucibles (3) which are disposed on a conveyor belt (1), each hold one sample and are successively chargeable by means of a lifting device (6) into the furnace, which is tubular and is disposed with its axis pointing in a vertical direction, with the apparatus having a gripping head (13) with two claws (14) for picking up the crucibles, characterised in that the gripping head (13) is rigidly connected to one end of a working piston (7) and the claws comprise two webs (15) extending parallel to and at a distance from one another and each having a projecting edge (16) turned to face the other projecting edge, with the opposite end of the working piston (7) to the gripping head (13) being connected to the end of a lifting piston (6) parallel to the latter's axis (8) by means of a transverse rod (10) in such a manner that the gripping head (13) is movable in and out of the furnace tube (12) and is pivotable about the axis (8) of the lifting piston (6), with there being disposed on the pivot radius (11) of the lifting piston (6) a loading and unloading station (4), past which the crucibles (3), which have an outwardly projecting circumferential edge (17), are conveyed at intervals by means of the conveyor belt (1), and with the claws (14) of the gripping head (13) being so aligned that they grip beneath the projecting edge (17) of each crucible (3).

2. Apparatus according to claim 1, characterised in that the lifting piston (6) or a piston associated with the lifting piston is a threaded spindle (23).

3. Apparatus according to claim 1 or 2, characterised in that the working piston (7) and the gripping head (13) are parts made of aluminium oxide.

4. Apparatus according to one of claims 1 to 3, characterised in that an end part (20), which closes the furnace (12), is disposed on the end of the working piston (7) on which the transverse rod (10) is applied.

5. Apparatus according to claim 2, characterised in that the threaded spindle (23) is rotatable by means of a drive (25) fixed to the housing.

6. Apparatus according to one of claims 1 to 5, characterised in that the working piston (7) is pivotable by means of a drive (29) which is arranged so as to be capable of associated movement along the lifting piston (6).

**Revendications**

1. Dispositif d'alimentation automatique répétée, du four (12) d'un appareil d'analyses d'échantillons, en creusets (3) qui sont disposés sur une voie de transport (1), qui contiennent chacun un échantillon, et qui peuvent être introduits successivement, à l'aide d'un dispositif de levage (6), dans le four de configuration tubulaire et dont l'axe est orienté dans la direction verticale, le dispositif pour saisir les creusets comportant une tête de préhension (13) avec deux griffes (14), caractérisé en ce que la tête de préhension (13) est reliée de manière rigide à une extrémité d'un piston de travail (7), et en ce que les griffes sont constituées par deux nervures (15) s'étendant parallèlement entre-elles et à distance l'une de l'autre, chacune comportant un bord (16) en porte-à-faux et ces bords étant tournés l'un vers l'autre, et le piston de travail (7) étant relié au niveau de son extrémité opposée à celle de la tête de préhension (13), par l'intermédiaire d'une traverse (10), à l'extrémité d'un piston de levage (6) en étant parallèle à l'axe (8) de ce dernier, de manière à ce que la tête de préhension (13) peut s'introduire ou sortir du tube de four (12) et peut pivoter autour de l'axe (8) du piston de levage (6), un poste de chargement-déchargement (4) étant situé sur le rayon de pivotement (11) du piston de levage (6), poste devant lequel la bande de transport (1) fait passer à intervals successifs les creusets (3) qui comportent un bord périphérique (17) en saillie vers l'extérieur, et les griffes (14) de la tête de préhension (13) étant orientées de telle sorte qu'elles viennent s'engager sous le bord (17) en saillie, du creuset (3) considéré.

2. Dispositif selon la revendication 1, caractérisé en ce que le piston de levage (6), ou bien un piston associé au piston de levage, est constitué par une tige filetée (23).

3. Dispositif selon la revendication 1 ou 2, caractérisé en ce que le piston de travail (7) et la tête de préhension (13) sont des pièces en alumine.

4. Dispositif selon l'une des revendications 1 à 3, caractérisé en ce qu'à l'extrémité du piston de travail (7) sur laquelle vient se prendre la traverse (10), est disposée une pièce d'extrémité (20) qui obture le four (12).

5. Dispositif selon la revendication 2, caractérisé en ce que la tige filetée (23) peut tourner au moyen d'un dispositif d'entraînement (25) fixe avec le carter.

6. Dispositif selon l'une des revendications 1 à 5, caractérisé en ce que le piston de travail (7) peut être pivoté par un dispositif d'entraînement (29) qui est monté de manière à pouvoir se déplacer le long du piston de levage (6) en l'accompagnant.

FIG. 1

FIG. 3

FIG. 2

FIG. 4

FIG. 5